# EUROPEAN PATENT APPLICATION

(11) **EP 2 709 080 A1**
(43) Date of publication of application: **19.03.2014**
(21) Application number: 12275141.5
(22) Date of filing: 13.09.2012
(51) Int. Cl.: G08B 13/186, G08B 13/187, G01S 7/483, G01S 17/02

(54) **Room occupancy sensing apparatus and method**

(71) Applicant: MBDA UK Limited, Stevenage, Hertfordshire SG1 2DA (GB)
(72) Inventor: The designation of the inventor has not yet been filed
(74) Representative: BAE SYSTEMS plc Group IP Department

(57) **Abstract**

A building comprising a plurality of rooms (10) includes a room occupancy sensing apparatus. A light source (20) emits a series of light pulses (22), a plurality of waveguides deliver light from the light source to output nodes (60) located in the rooms, and a signal capture unit (30) receives output signals resulting from light reflected by objects in the rooms. The apparatus detects movement, of for example a person (40), in a room and ascertains the room concerned by virtue of (i) detecting a difference between the signal (24i) received at the signal capture unit (30) in response to a first emitted light pulse and the signal (24m) received at the signal capture unit in response to a second emitted light pulse and (ii) relating said reflected light pulses to the appropriate output node and therefore to the room (10) associated with that output node (60).

## Description

### Background of the Invention

The present invention concerns a room occupancy sensing apparatus. More particularly, but not exclusively, this invention concerns a building comprising a plurality of rooms and a room occupancy sensing apparatus, and a corresponding method for sensing room occupancy.

In various applications there is a desire to be able to detect which, if any, of a plurality of rooms are occupied. For example, such a function may be of particular use in quickly assessing which of many rooms in a building are occupied in the case of an emergency, such as a fire, or in detecting a burglar or other intruder or unauthorised person. Room occupancy sensing systems of the prior art are typically based on passive infrared sensors, which detect relatively large movements, and therefore occupancy, by means of monitoring a change in infra-red radiation from a moving heat source; however, such systems are not sufficiently sensitive for use in some applications: a relatively high background temperature in a room can adversely affect accuracy for example. For more sensitive applications, active sensor systems may be more appropriate. One such active sensor system uses radio frequency (RF) radiation and works by creating a field of radio wave radiation with one or more RF emitters and detecting changes in that field via one or more RF detectors. Such changes are caused by movement, which suggests occupancy in the associated room. The wavelength and power of such RF radiation can be chosen to suit the application, and can be chosen such that movement can be detected through walls in a building. The sensitivity and range of motion detection in such RF-based systems can be difficult to get right, however: increasing sensitivity can have the effect that motion in an adjacent room is detected through a wall, leading to false positive detections being made (e.g. suggesting incorrectly that there is motion within a room based on detecting motion in an adjacent room through a partition wall), whereas reducing sensitivity to the level where false positives are reduced to a reasonable level can risk rendering the motion detection system insufficiently sensitive to detect room occupancy reliably.

US2010/0053330 (Hellickson et al) describes a LADAR based security sensor system that operates by comparing a 3D LADAR image of a scene with a 3D template of the scene. When an intruder enters the scene the microprocessor detects a difference between the LADAR sensor output and the 3D template. Calibration of the system of US2010/0053330 is required, which accounts for the fixed objects within the scene, so as to create the pre-determined spatial reference template against which the spatial image information is compared. If any objects are moved (e.g., a chair when someone moves to a new location), the system needs to be recalibrated in order to avoid a false alarm. US2010/0053330 is a relatively complicated spatial imaging system for monitoring a single scene, for example a single room. Monitoring of multiple rooms would appear to require multiple systems. The methodology of US2010/0053330 relies on capturing a spatial image of a room, namely a 3-D image comprising multiple pixels. The system of US2010/0053330 relies on the detection of spatial information concerning the scene being monitored; this results in a system that would be relatively complicated and expensive for a room occupancy sensing system.

The present invention seeks to mitigate the above-mentioned problems. Alternatively or additionally, the present invention seeks to provide an improved room occupancy system, preferably one which provides improved sensitivity to small movements of, or caused by, an occupant in the room.

### Summary of the Invention

The present invention provides, according to a first aspect, a building comprising a plurality of rooms and a room occupancy sensing apparatus, the room occupancy sensing apparatus comprising:
- at least one light source arranged to emit a series of light pulses,
- a plurality of waveguides, at least some of the waveguides being arranged to deliver light from the light source to one or more output nodes located in each of the plurality of rooms,
- at least one signal capture unit arranged to receive output signals resulting from light reflected by objects in the plurality of rooms, and
- a signal processor,
   wherein
   the apparatus is arranged so as to be able to distinguish between a light pulse reflected by an object in a room delivered to that room via any one output node from a reflected light pulse originating from an output node in any different room (and preferably from any other output node), and
   the apparatus is so arranged that, in use, the signal processor compares the signal received at the signal capture unit in response to a first emitted light pulse with the signal received at the signal capture unit in response to a second emitted light pulse,
   whereby the apparatus is able both to detect movement in a room and to ascertain the particular room in which movement has occurred by virtue of (i) detecting a difference between signals received by the signal capture unit resulting from reflected light pulses from such first and second emitted light pulses and (ii) relating said reflected light pulses to the room concerned (for example by relating said reflected light pulses to the appropriate output node and therefore to the room associated with that output node).

Using a light source in this manner may allow the occupancy of a room to be ascertained whilst reducing significantly the risk of false positives from movement in a region outside of the room, because room layouts are often such that light is substantially prevented from transmitting from one room to another. Rooms are typically separated by partitions walls that do not transmit light. Even where rooms are separated by partitions that transmit some wavelengths of light, the light may be selected to be of an operating wavelength that is not transmitted by the partition (for example, in the case of a glass partition, the wavelength may be an appropriate infrared wavelength). Also, using light as the source of radiation may facilitate the use of fewer sources of radiation for the system, as it is possible to use one source for many rooms, with appropriate optics and/or controls in place to allow the apparatus to distinguish between a reflected light pulse originating from one output node and a reflected light pulse originating from another output node.

The ability to detect a difference between signals received by the signal capture unit resulting from reflected light pulses from respective first and second emitted light pulses, such a difference for example being caused by movement or introduction of an object into the room, may be achieved by means of the apparatus comparing temporal differences between the respective pulses. For example, the shapes of the waveforms of the reflected light pulses may differ as a result of at least some of the light being reflected differently, as between the first and second pulse, and therefore travelling over paths of different lengths and therefore resulting in temporal differences in the waveforms of the reflected light signals. It is not essential for a room occupation system of the type provided by embodiments of the present invention to have the ability to detect spatial image information concerning the scene in each room being monitored. Using temporal differences between the waveforms of pulses to detect a change in the scene being monitored (e.g. movement of an object in a room) provides a simple and elegant solution to detecting room occupation. For example, having a room occupancy sensing apparatus which operates by means of using the way in which the waveforms of reflected light pulses vary with time, does not require the use of a large array of image pixels, or the detection or reconstruction of spatial image data.

It may be that the light is of an intensity and/or an operating wavelength selected to provide a signal-to-noise ratio sufficient to distinguish the pulses from ambient light sources. The apparatus may include a filter to attenuate incoming light of wavelengths other than the operating wavelength.

The present invention has particular application in relation to detecting room occupancy, for example for ensuring fire-risk safety and/or intruder detection, in large buildings with many rooms (ten or more). The building may have more than five rooms, and may have more than ten rooms. Preferably, more than five rooms (and possibly more than ten rooms) are monitored with the room occupancy sensing apparatus. Preferably, substantially all rooms in the building that are designed for human occupation are associated with at least one output node, and each output node is only associated with one room.

Optionally, the rooms in which one or more of the output nodes are located may include at least one communal area, for example an open plan area, corridor, kitchen or lavatory area.

As mentioned above, the apparatus is so arranged that, in use, the signal processor compares the signal received at the signal capture unit in response to a first emitted light pulse with the signal received at the signal capture unit in response to a second emitted light pulse. It will of course be appreciated that the words "first" and "second" are used in this context as convenient labels to distinguish between the two emitted light pulses concerned. There may for example be other emitted light pulses that are received between the "first" and "second" light pulses. It is however preferred that the time between the first and second light pulses is less than 5 seconds, thus ensuring that the occupancy of a room is checked at least once every 5 seconds. Having a relatively short time between the first pulse and the second pulse effectively means that the occupancy or otherwise of a room is compared against a very recently generated reference (the first pulse for example being the reference for an unoccupied state of the room, against which the second pulse is effectively compared). Thus, movement of objects (for example, the position of a chair) within the room, when occupied, are accounted for, without any need for recalibration of the apparatus, when the room becomes unoccupied again. The first pulse may be used as a reference pulse, and used for comparison with second, third, and successive pulses. Preferably, however, the apparatus uses a different pulse as the "first pulse" against which a subsequent pulse is effectively compared, at least once every minute.

At least a part of the signal processor may be formed as part of the signal capture unit. Alternatively, the signal processor may be wholly separate from the signal capture unit.

The apparatus is preferably arranged to convert the reflected light pulses into digital signals for processing by the signal processor. There may therefore be transducers for converting the light signals into electric signals. The signal capture unit may be arranged to receive output signals resulting from light reflected by objects in the plurality of rooms by means of receiving the light directly. In such a case, the signal capture unit may itself include one or more light transducers. The light transducers may convert the light signal into an electric signal. Alternatively, or additionally, one or more light transducers may be provided separately from the signal capture unit, for example in each room having an output node. In such a case, the output signals received by the signal capture unit may include electric signals converted by the light transducers from light reflected in a room. There may be a transducer that is arranged to generate electric signals from light signals reflected by objects in each of a plurality of different rooms. In such a case, the transducer may be arranged to receive a sequence of light waveforms, the successive light waveform each being associated with light reflections in a different room. One transducer can therefore be used to distinguish between light reflections in one room from those of another room. The or each transducer may be in the form of a photodiode.

The or each transducer is preferably able to convert a varying light signal (or waveform) into an electric signal (or waveform) having a resolution sufficient to enable detection of changes in light intensity of a duration of a nanosecond (more preferably, one-tenth of a nanosecond). The capture unit and/or signal processor preferably utilise a sampling period of between 10 and 1,000 picoseconds. A higher sampling rate will provide greater resolution of detection and allow detection of smaller amounts of movement within a room. Light travels about 3mm in 10 picoseconds and about 30cm in a nanosecond (=1,000 picoseconds). Preferably, the apparatus is arranged to enable detection of changes in light intensity of a duration of 2 x 10⁻¹⁰ seconds (a sample rate of the order of 5GS⁻¹ - i.e., 5 Giga-samples per second = 5 x 10⁹ samples per second). In such a case, the transducer required to provide such resolution of measurement may be relatively expensive, in which case having one transducer serving many nodes is particularly advantageous.

Each room may comprise one or more input nodes for collecting light reflected in the room. Conveniently, at least some of the plurality of waveguides are arranged for delivering light reflected by objects in the plurality of rooms, via one or more input nodes in each room, to the signal capture unit. At least some of the plurality of waveguides are arranged both to deliver light from the light source to one or more output nodes and to deliver reflected light from one or more input nodes. Thus, the same waveguide may be used both to deliver light and to receive reflected light. At least one input node may also perform the function of an output node. (As such references herein to an "output" node may, where the context so allows, equally apply to an "input" node and *vice versa.* Also, features described with reference to one of the three principal types of node, namely (a) an input node, (b) an output node, or (c) a node that performs both as an input node and an output node, may equally apply to a node of a different one of those three types.) There may be advantages in having more input nodes in a room than the number of output nodes in that room, for example in view of the way in which light may be reflected within the layout of a certain room. Each input node may be arranged to collect and/or detect light at a given region, but may not be configured to distinguish between the intensity or wavelength of the light at different positions within that region. In effect, each input node may be in the form of a single pixel node. Whilst, there may be many nodes arranged in a room a majority of the nodes are preferably spaced apart from each other.

The nodes may each be provided with an appropriate lens suited to ensure that the node covers the intended area of the room. A Fresnel lens may be used for example.

It is preferred to limit the number of output nodes. It is believed that a relatively small-sized room, having a floor area of about 5 square metres for example, can be monitored by means of a single output node. Preferably, there are a plurality of rooms in the building in each of which there are provided only one or two output nodes. Preferably, there are a plurality of rooms in the building in which there is provided only one output node.

The light source may be a laser light source. The laser light source is preferably in the form of an Infra-Red laser unit.

Advantageously, one light source is arranged to deliver light to a multiplicity of output nodes. Thus, a single laser source with a sufficiently high specification to provide accuracy may serve many rooms thereby reducing the cost of the apparatus. The light source is preferably arranged to emit pulses each having a duration of between 0.1 and 200 nanoseconds. The light source is preferably arranged to emit pulses each having a duration of less than 100 nanoseconds. The light source may be arranged to emit pulses each having a duration of more than 1 nanosecond. It is preferred however to have light pulses each having a duration of less than 1 nanosecond. Light can travel about 30cm in 1 nanosecond and can travel about 60m in 200 nanoseconds. The received waveform (or waveforms, for example if there are two or more input nodes) will typically have a duration that is longer than the emitted pulse. Some objects in the room may be closer to the output / input node(s) such that the route from an output node, via object (and reflection) and back to an input node is significantly shorter than other routes. If the room has a maximum dimension of say 10m then the difference in distance travelled by light along one path and another path could easily be 10m or more. The received (reflected) light pulses may therefore have a duration that is at least 30 nanoseconds, and possibly more than 100 nanoseconds.

The waveguides are conveniently in the form of fibre optic cable.

As mentioned above, the apparatus can distinguish between a light pulse reflected by an object in a room delivered to that room via any one output node and a reflected light pulse originating from any other output node. This may be achieved in any suitable way. In the described embodiments, where the width (duration) of the light pulses is relatively low, the timing of the pulse is used to determine which node the pulse has been reflected from. Preferably, the apparatus introduces a time delay between the light delivered to one room and the light delivered to the next room. When using a single light source with many rooms, this may be achieved by emitting a single pulse, splitting that pulse for delivering to multiple different output nodes, and ensuring that the path length to each such output node differs sufficiently that the pulses are emitted from each output node with a delay between successive pulses at the time they are emitted. Thus, the reflected pulses are then advantageously separated from each other temporally, allowing the apparatus to determine the output node from which a reflected pulse originated. Conveniently, the waveguides that deliver the light to the output nodes differ in length sufficient to introduce such a time delay between the pulses by successive output nodes. It will be appreciated that a waveguide for delivering light from a light source to a distant room will necessarily have a minimum length that is longer than the minimum length required of a waveguide for delivering light to a room that is closer to the light source. As such, it may be convenient (but not necessary) to build in a longer time delay in relation to output nodes that are further away from the light source than the time delay in relation to output nodes that are closer to the light source. Alternatively, or additionally, different wavelengths of light could be used to distinguish between light sent to and reflected by certain rooms. Alternatively, or additionally, more light transducers could be provided per room.

The room occupancy sensing apparatus may be integrated with a system that detects operation of doors. For example, certain doors may require the use of an electronic key, swipe-card or the like thereby allowing detection of a human presence at the door. Such integration could reduce the number of false positives by means of discounting detected occupancy in a room that has been deemed empty for reason of the entry door to that room not having been operated within a suitable time period (for example since the start of the day concerned). The room occupancy sensing apparatus may be integrated with other monitoring systems in the building.

There may be one or more further buildings having rooms that are also monitored by the same room occupancy sensing apparatus.

There is also provided, according to a second aspect, a room occupancy sensing apparatus for sensing the occupancy of two or more rooms in a building, the room occupancy sensing apparatus comprising (a) at least one light source arranged to emit a series of light pulses, (b) a plurality of waveguides, at least some of the waveguides being arranged to deliver light from the light source to a plurality of output nodes, which are each arranged for being located in a room, (c) at least one signal capture unit arranged to receive output signals, which in use (for example when the room occupancy sensing apparatus is installed and used in a building) result from light from the output nodes being reflected (for example by the scene within a room) and detected (for example via one or more input nodes), and (d) a signal processor. The apparatus is preferably arranged so as to be able to distinguish between a reflected light pulse resulting from light emitted by any one output node and a reflected light pulse resulting from light emitted by any other output node. The apparatus is preferably so arranged that, in use (for example when the room occupancy sensing apparatus is installed and used in a building), the signal processor compares the signal received at the signal capture unit in response to a first emitted light pulse with the signal received at the signal capture unit in response to a second emitted light pulse, whereby the apparatus is able in use both to detect movement in a room and to ascertain the particular room in which movement has occurred by virtue of (i) detecting a difference between signals received by the signal capture unit resulting from reflected light pulses from such first and second emitted light pulses and (ii) relating said reflected light pulses to the appropriate output node and therefore to the room associated with that output node. The room occupancy sensing apparatus of this second aspect of the invention may be provided as an installed system in a building, or may be provided separately in order to convert a building comprising a plurality of rooms into a building according to the first aspect of the present invention. As such, features of the first aspect of the present invention may be incorporated into this second aspect of the invention.

According to a third aspect, the present invention also provides a kit of parts for converting a building comprising a plurality of rooms into a building according to the first aspect of the present invention. The kit of parts may comprise at least one light source for emitting a series of light pulses. The kit of parts may comprise a plurality of waveguides. The kit of parts may comprise one or more output nodes. The kit of parts may comprise one or more input nodes. The kit of parts may comprise at least one signal capture unit. The kit of parts may comprise a signal processor. Features of the first aspect of the present invention may be incorporated into this third aspect of the invention.

The present invention also provides, according to a fourth aspect, a method of sensing room occupancy. The method may comprise using a room occupancy sensing apparatus according to the second aspect of the invention. The method may comprise a step of delivering a series of light pulses via a plurality of waveguides to one or more output nodes located in each of the plurality of rooms. The scene in each room may then reflect the light pulses emitted by the output nodes. The method may comprise a step of detecting the reflected light pulses. The method may comprise a step of monitoring for a difference between the detected waveform of a first reflected light pulse reflected from the pulse emitted from an output node and the detected waveform of a second reflected light pulse from the same output node, and performing such a monitoring step in respect of each of the output nodes. Detecting movement in a room may be achieved by means of detecting such a difference between detected waveforms. The particular room in which movement, and therefore occupancy, is detected may be ascertained, preferably by means of determining the output node with which the difference so detected is associated. The method may comprise using a signal processor (for example an electronic signal processor, computer or the like) to ascertain the difference if any between the detected waveforms.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
Figures 1a and 1b show an occupancy sensing system in accordance with a first embodiment of the present invention in an unoccupied room;
Figures 2a and 2b show the occupancy sensing system of the first embodiment in an occupied room;
Figure 3 shows the occupancy sensing system of the first embodiment in use in two adjacent rooms;
Figures 4a to 4d show the steps of emitting and receiving light pulses as used in a second embodiment of the invention;
Figure 5 shows the arrangement of the network of nodes provided for emitting and receiving light pulses in the second embodiment; and
Figure 6 shows an occupancy sensing system in accordance with a third embodiment of the present invention.

### Detailed Description

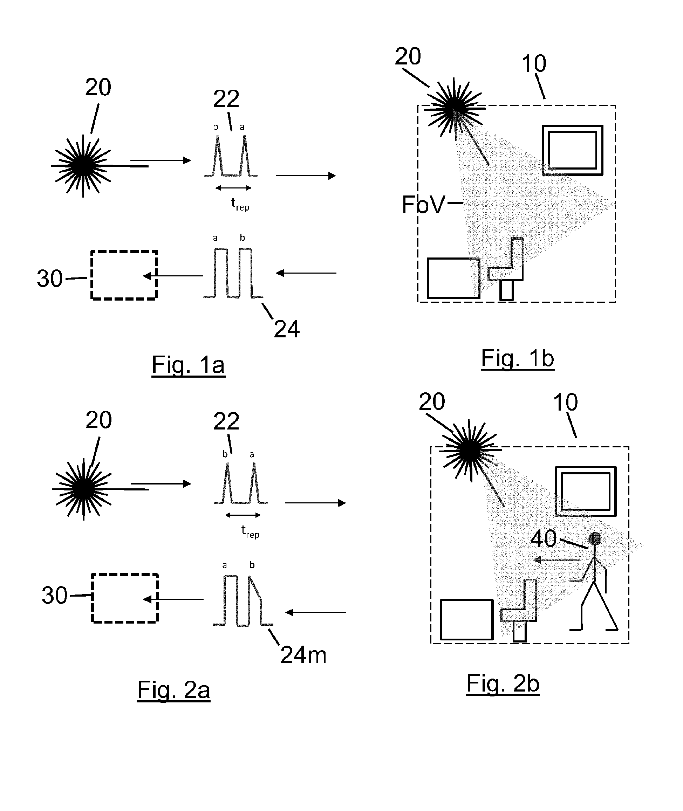

Figures 1a, 1b, 2a, and 2b illustrate schematically the principle of operation of an occupancy sensing system in accordance with a first embodiment of the present invention. Figures 1a and 1b show the system working with an unoccupied room 10. The system shown comprises a pulsed laser unit 20 which emits identical pulses 22 (labelled individually as pulse "a" and pulse "b") of laser light separated by a specified time, tᵣₑₚ. The pulses 22 emitted by the laser unit 20 are reflected by the physical surfaces in the scene within the sensor Field of View (FoV). The reflected pulses 24 are detected and stored by a capture unit 30 as digital waveforms. If no change (i.e. motion) occurs between the reflections of two sequential pulses, their reflected waveforms 24 will be identical, as shown in Figure 1a. Figures 2a and 2b show the system of Figures 1a and 1b in operation when the room 10 is occupied by a moving person 40. As shown in Figures 2a and 2b, the motion that occurs in the sensor FoV during the time between the reflections of two sequential pulses ("a" and "b"), as a result of the person 40 entering the FoV, changes the physical layout of the scene between the first pulse and the second pulse. The laser pulses are therefore reflected differently, the second pulse for example being reflected so that at least part of the light travels along a path of different length, resulting in some light taking a different length of time before being detected (in comparison to the first pulse). This results in temporal differences between the waveforms of the reflected pulses 24m, as shown in Figure 2a. The capture unit 30 detects that the shape of the waveform of the second pulse (pulse "b") of the two pulses 24m is different from the first, thereby detecting the motion in the room, and therefore detecting that the room is occupied. In this manner, the laser pulses are effectively used for laser range-finding, rather than in a laser-imaging capacity. The system is a non-imaging system and instead uses temporal (time-based) characteristics of light pulses as the means of occupancy detection (for example, analysing and/or comparing waveforms in the time-domain).

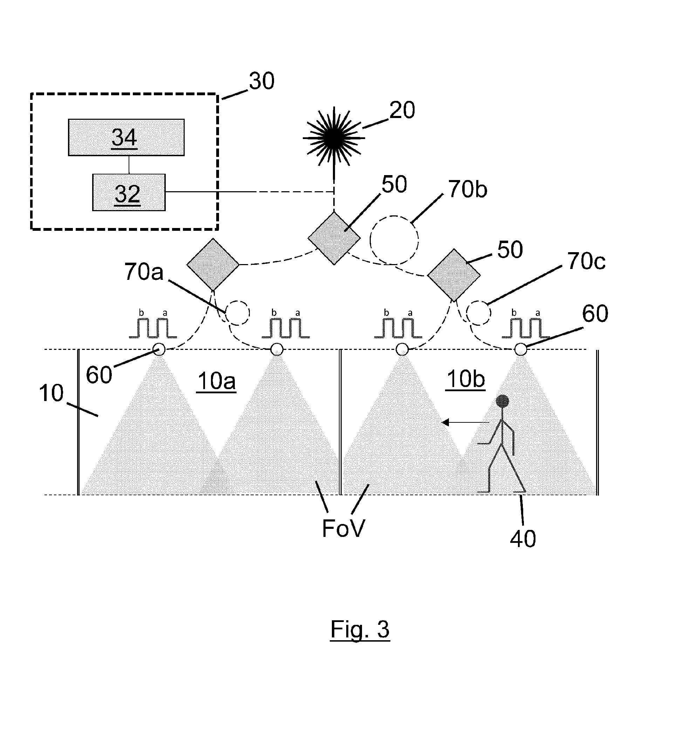

The first embodiment is shown in further detail in Figure 3, which shows the occupancy sensing system installed in a building, which in this first embodiment is in the form of an office building having multiple rooms 10 any of which could be occupied. Two such rooms 10a, 10b are shown in Figure 3. The occupancy sensing system is arranged to detect which of many rooms 10 are occupied, for example by one or more employees, at any given time. Such a function may be of particular use, for example in quickly assessing which of many rooms in a building are occupied in the case of an emergency, such as a fire. It may otherwise be difficult to determine whether one or more rooms have been successfully evacuated, particular if there are many rooms in the building, if there are rooms that are remotely located, and/or if access to any given room is restricted.

With reference to Figure 3, a single pulse laser unit 20 generates successive pulses of laser light, with a period of tᵣₑₚ that are split by splitters 50 into multiple light paths (defined by fibre optic cable), each light path being associated with a respective pulse of light. The pulses are carried by fibre optic cable to multiple output nodes 60. An output node is formed at the end of the fibre optic cable in the room to be monitored and is associated with a suitable lens in order to provide an adequate field of view (although it would be possible for an output mode to be defined by the open end of the bare fibre, which would in any case provide a relatively wide field of view). The fan-out structure of the fibre optic cable network illustrated in fig. 3, particularly the arrangement of signal splitters 50 between the source 20 and each output node 60, allows each node 60 to output approximately the same pulse power, meaning that any required amplification of the pulse waveforms for analysis can be substantially uniform. Return reflections are carried back to the capture unit 30, which includes both a transducer, in the form of detector 32, and a control unit 34. The control unit 34 includes a computer processor. The detector 32 receives and detects the reflected pulses and converts the received pulses into electrical digital waveforms. The control unit controls the operation of the system and also processes the digital pulse waveforms.

The pulses 22 from each output node 60 are emitted at the point of the node at different times, separated by a delay Δt. The delay Δt between the time at which one pulse is emitted from one node and the time at which the same pulse is emitted from the next node is introduced by a delay loop 70 in the relevant fibre optic cable. This may be achieved in practice by using fibre optic cables of varying lengths as delay lines - the longer the cable, the longer the time taken for a pulse to be emitted from the output node, reflected and received by the detector. The length of the fibres is therefore incremented cumulatively for each node by a length equivalent to the required interval.

In Figure 3 it will be seen that the route to the leftmost node in the Figure, has no delay loops. The fibre optic cable route to the next node (second from the left) has a delay loop 70a that adds a delay of Δt. The fibre optic cable route to the next pair of nodes (the two nodes on the right) includes a larger delay loop 70b that adds a delay of 2Δt to the routes to both nodes. The route to the node on the far right also includes a further delay loop 70c that adds a delay of Δt. Thus, during operation, a laser pulse is emitted by the source 20 and is then split into four laser pulses by the splitters 50, which arrive at the nodes at times To (far left node), T₀+Δt, T₀+2Δt, and T₀+3Δt, respectively. The reflected pulses travel back from the nodes 60 to the capture unit 30 along the same route as taken by the pulse from the laser source 20 to each such node 60. The same node 60 is used both as output and input of laser light to and from the room. Thus a further delay is added so that the laser pulse that is delivered to each node 60 is reflected in the room and received back at the capture unit 30 at different times, separated by an interval of at least 2Δt.

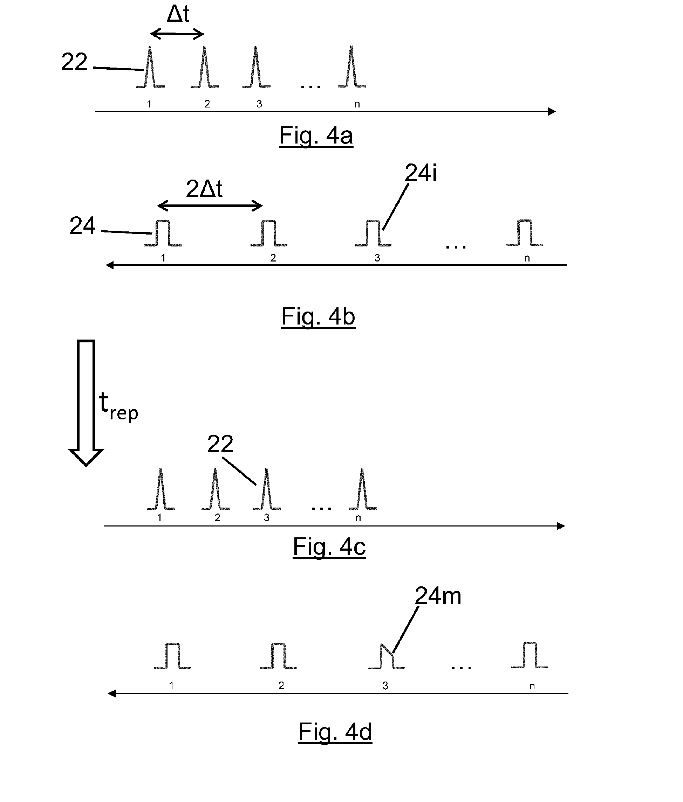

The length of the pulses is chosen to be sufficiently short (relative to the delay Δt) and the separation between successive pulses emitted by the laser source 20 is chosen to be sufficiently long (longer than the time between the instant at which the pulse is emitted and last reflected pulse is received at the capture unit) to ensure that the pulses received at the capture unit, originating from different nodes, do not overlap or interfere with each other and can be readily distinguished by the capture unit. Thus, for a system having *n* nodes, a single pulse emitted by the laser source is split into *n* pulses and emitted by the *n* nodes. The capture unit receives a sequence of *n* reflected pulses resulting from that single pulse emitted by the laser source, before the laser source emits the next pulse (consider also the explanation provided below with reference to Figure 4a to 4d of the second embodiment).

The reflected pulses are captured, digitised, stored and processed by the capture unit. The node from which the reflected pulse is received is identified by means of the time at which the pulse is received. The digital waveforms from successive reflected pulses from the same node are compared by the computer processor of the control unit 34 (in the capture unit 30). In this embodiment, a Binary Two's Complement method is used to compare the pulse waveforms. This is equivalent to inverting one of the waveforms and adding the two resulting waveforms in analogue space. Regardless of their shape, if the waveforms are identical, a null output will occur. However, if the two waveforms differ due to motion occurring during the time between the pulse reflections, a non-zero output will be apparent, indicating occupancy. The room in which occupancy has been detected can be determined by relating the input/output node from which the reflected pulse was received to the room it is associated with.

In the present embodiment, the time tᵣₑₚ is about one second, equating to a pulse repetition rate (at the laser source) of about 1Hz. A faster rate could be used, but 1 Hz allows for detection of motion of typical speed in the workplace. The rate may be calibrated according to the type of application/installation. The present embodiment is used in relation to rooms having a height of 5m, where the nodes are ceiling mounted. The average pulse from each node travels a 10m return journey from the node, via reflection in the room and back to the node. The light travels at 3 x 10⁸ ms⁻¹. A 10m journey by the light thus takes about 33 nanoseconds. The width of the pulse emitted from the laser source is about 1 nanosecond (i.e. about 30cm). The width of the pulse will spread as a result of different reflections in the room and as a result of dispersion and other pulse-spreading effects as the light travels along the fibre optic cable. The capture unit therefore operates using a pulse sampling interval of about 100 nanoseconds, resulting in 100 nanoseconds worth of data being stored per pulse per node. Each 100 nanoseconds worth of data includes 1,000 data points, requiring a sampling frequency of 10GSs⁻¹. The resolution of movement that can be detected with such a system is thus of the order of 3cm. Given that each pulse requires of the order of 100 nanoseconds of sampling at the capture unit, the system of this embodiment (operating at a pulse repetition rate of 1s) could use as many as 10⁶ (and possibly up to almost 10⁷ - i.e. 1 second cycle time divided by 100 nanoseconds pulse sampling interval time) pulse output nodes without any overlap in successive pulses.

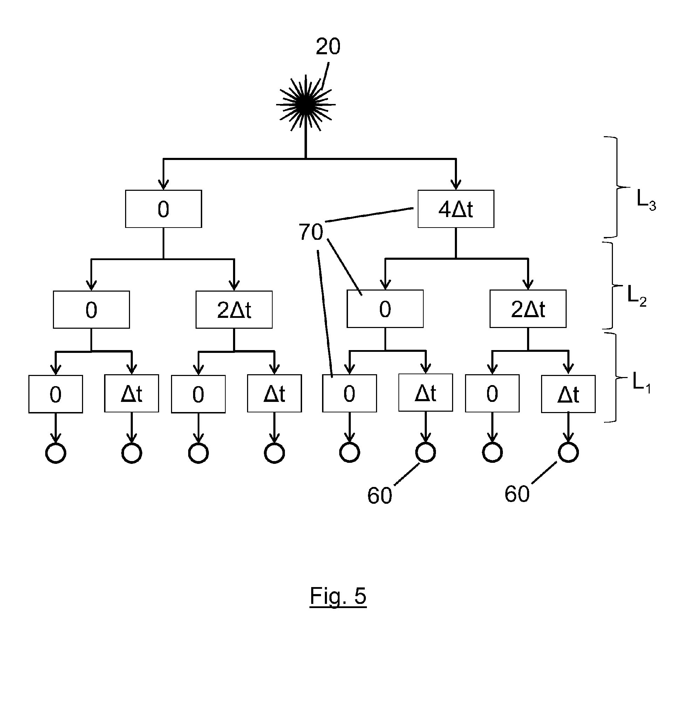

The system of the first embodiment can be readily scaled up by adding more splitters and delay loops. By way of illustration, Figures 4a to 4d and 5 illustrate a second embodiment of the invention installed in a building for monitoring a larger number of nodes. Figures 4a to 4d show the steps of emitting and receiving pulses. In this embodiment, there is one node per room. Initially (Figure 4a) the laser source emits a single pulse, which by means of the delay loops, generates successive pulses at the respective output nodes. The successive pulses are separated by a time delay of Δt. Figure 4a shows the first three pulses and the last (nₜₕ) pulse only. Each pulse is emitted from an end of the fibre optic cable which is positioned and configured in each room to provide an adequate field of view. The pulse is then reflected in the room, a part of the reflection being detected via the same end of the fibre optic cable (so that the output node in each room also performs the function of the input node). Consequently (with reference to Figure 4b) as the reflected pulses 24 travel back via the fibre optic cable network, extra delays are introduced so that the received pulses are separated by time 2Δt. The reflected pulses 24 each have a modified waveform (compared to the emitted pulses) that depends in part on the physical layout of the room and the way in which the emitted pulse is reflected in the room and back to the input/output node. Each respective reflected pulse 24 may therefore have a shape that is particular to the layout and shape of the room and its contents (of field of view) at a given time. The reflected pulses 24 will therefore almost certainly have different waveform shapes.

After a time tᵣₑₚ the next pulse is emitted by the laser source (as shown schematically in Figure 4c). In this case, there has been a movement in room number 3 and no movement in any of the other rooms. As such this latter reflected waveform 24m (see Figure 4d) from the third node has a different shape from the immediately preceding reflected waveform 24i (see Figure 4b) from the third node. The capture unit compares successive reflected pulses from each node for changes sufficiently large to signify movement in the room. Thus, in this example, the capture unit detects a change in the shape of the third node's reflected pulses and deems the associated room to be occupied.

Figure 5 shows how the fibre optic cable network can be expanded to allow for many output/input nodes for each laser source / capture unit. Figure 5 shows a network for 8 nodes. The network has 3 levels, L1, L2, L3 (which in Figure 5 are labelled such that the level closest to the nodes is labelled L1). At each level, the number of pulses is doubled by means of optical splitter units dividing each pulse received by that unit into two pulses. Delay loops are then inserted to provide different delay times for each respective pulse as outputted at a node. The delay loops could of course be inserted differently, but for an efficient use of optical cable, longer delay loops are inserted closer to the source. Thus, in Figure 5, at the topmost level, L3, the single pulse from the laser light source 20 is split into two pulses, one passing down a left-hand branch to which no delay is added and one down a right-hand branch to which a delay of 4Δt is added. The two pulses then pass to the next level at which each pulse is split into two pulses, one having no delay added and one having a delay of 2Δt added. The process is repeated again at the lowest level, L1, with the split pulses having either no delay or a delay of Δt added. As a result, the pulses arriving at the nodes 60 have successive delays (from left to right) of 0, Δt, 2Δt, 3Δt ... 7Δt. If more than 8 nodes are required another level is added above level L3 in a similar pattern. Thus, for *n* nodes, there needs to be *l* levels, where *l* is equal to (log *n*) / (log 2), rounded up. The delay to be inserted at the *i*ₜₕ level will be equal to 2ⁱ⁻¹ (2 to the power of *i*-1) Δt. It will also be appreciated that 2*n* Δt will ideally be relatively low compared to tᵣₑₚ, so that all reflected pulses generated by a first pulse emitted from the laser source are received before the reflected pulses generated by the next pulse emitted from the laser source start to arrive.

The physical length of the delay loops introduced into the fibre optic cable network should be determined taking into account the length and refractive index of the fibre optic cable from the laser source to the nodes. Thus, the physical separation of rooms, and differing distances of the rooms from the location of the laser source may introduce part of the delay required for each node. For this reason, it may be more efficient and convenient if the nodes that are closest to the laser source are connected by fibre optic cables having less in the way of cable added to introduce delay loops, whereas the nodes that are further away have the longer delays.

It will be seen that the scalable system illustrated by the first and second embodiments enable occupancy sensing of large areas at relatively low cost, because the system design proposed consists of a smaller number of lasers than there are sensing areas (e.g. a single pulsed laser) and a network of pulse output nodes connected by optical fibres. These are emitted from the laser unit and will travel along the optical fibres to be emitted by each pulse output node. The pulses are reflected and received by a smaller number of detectors than sensing areas, (e.g. a single detector and capture unit).

The number of units required to provide full coverage of the area or areas of interest will depend on the Field of View (FoV) of each pulse output unit. Sensor FoV may be adjusted to the required width using optical lenses on each pulse unit. Maximum coverage using the minimum number of laser nodes and computers may be achieved by increasing sensor FoV. Conversely, using a greater number of laser nodes with a narrow FoV may enable the system to be used as a high-resolution motion location and therefore tracking system.

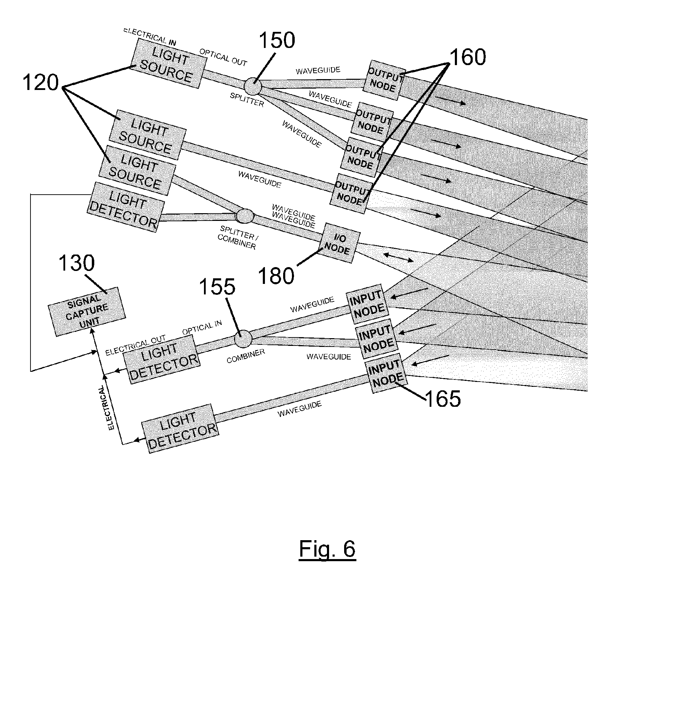

Figure 6 illustrates schematically an occupancy sensing system in accordance with a third embodiment of the present invention, showing part of the system only in relation to a single room. The system has many independently operable pulsed laser units 120 each of which emits identical pulses of laser light, in turn. The light pulses are split by splitters 150 and outputted from output nodes 160. Some laser units supply more output nodes than others. The path length between the laser unit and the output node is set by the length of the path of the one or more waveguides, which may include one or more delay loops, between the laser unit and the output node. The laser units are controlled by a central control unit such that pulses of laser light are emitted in sequence from the output nodes, the start of the pulse emitted from one output node to the next being predetermined by the control unit and the path length between the laser unit and the output node, and being a pre-set parameter of the system. There is a delay between triggering the laser unit and the laser unit emitting a light pulse, but this delay can be assumed to be approximately the same for all laser pulses, and therefore does not need to be accounted for. Return reflections are carried back to a capture unit 130 via input nodes 165 and associated waveguides, and optionally combiners 155. In Figure 6, only one node 180 is illustrated as acting as both an input node and an output node. The return reflected waveforms are analysed in a similar manner as that described with reference to the first embodiment. Some nodes are shared and thus in this embodiment it may not be possible for the apparatus to detect (or "know") the exact path taken by light that is received at the capture unit 130. However, the apparatus is able to distinguish between light received from a node or nodes in one room from light received from nodes in other rooms. The system of the present embodiment is also, like the other illustrated embodiments, able to cope with a situation in which, inadvertently, a detector in a room can 'see' stray radiation from a light source (output node), other than the one to which it is matched. Consider, for example, a scene which contains a computer monitor with a glossy screen. A first output node may illuminate part of the scene which contains the monitor, and whilst a first input node may receive most of the signal, some stray radiation may accidently be reflected off the glossy screen into another input node, which is in the same room. Despite this, the embodiment still functions correctly, since the same amount of stray radiation would be found as between successive pulses (assuming no other changes in the scene): it is successive pulses that are compared, and so the system is, in effect, constantly recalibrating itself.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The apparatus may be arranged so as to account for changes in background radiation. If a person in a room turns a light on or off in a room, or otherwise changes the lighting, there may be changes in the shape or magnitude of the waveform of light detected by the room occupancy sensing apparatus. However, in the case where the apparatus is a room occupancy sensing apparatus and not a motion detection system such changes would correctly indicate occupancy of the room. Changes in background light conditions in a room not caused by a person occupying the room may be discounted by the room occupancy sensing apparatus. For example, all lighting in the building may be controlled by a system that integrates with the room occupancy sensing apparatus. In such a case, energy savings may be made by means of the system turning off lights in rooms that are deemed empty. The apparatus may be able to discount changes in outside lighting conditions, if such conditions affect the light conditions in the room, by methods that will be readily apparent to the skilled person.

There may be more than one output node per room. The circuit and fibre optic cables for detecting and analysing reflections in the rooms may be separate from the circuit for causing pulses of light to be emitted in each room. Whilst having identical laser pulses (emitted from different output nodes) is desirable, this is not essential. More than one laser could be provided. The laser light is split in two at each level of signal splitting. The laser light could however be split into more separate pulses at each level of signal splitting.

The pulse sample interval and rates could be changed to improve resolution or to reduce resolution, but perhaps reduce the cost of the components required for the system.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A building comprising a plurality of rooms and a room occupancy sensing apparatus, the room occupancy sensing apparatus comprising:
- at least one light source arranged to emit a series of light pulses,
- a plurality of waveguides, at least some of the waveguides being arranged to deliver light from the light source to one or more output nodes located in each of the plurality of rooms,
- at least one signal capture unit arranged to receive output signals resulting from light reflected by objects in the plurality of rooms, and
- a signal processor,
wherein
the apparatus is arranged so as to be able to distinguish between a light pulse reflected by an object in a room delivered to that room via any one output node from a reflected light pulse originating from any output node associated with any different room,
the apparatus is so arranged that, in use, the signal processor compares the signal received at the signal capture unit in response to a first emitted light pulse with the signal received at the signal capture unit in response to a second emitted light pulse,
whereby the apparatus is able both to detect movement in a room and to ascertain the particular room in which movement has occurred by virtue of (i) detecting a difference between signals received by the signal capture unit resulting from reflected light pulses from such first and second emitted light pulses and (ii) relating said reflected light pulses to the room concerned.

2. A building according to claim 1, wherein said at least one signal capture unit is arranged to receive light signals reflected by objects in the rooms.

3. A building according to claim 1 or claim 2, wherein the room occupancy sensing apparatus comprises one or more transducers for converting light signals reflected by objects in the rooms into electric signals.

4. A building according to claim 3, wherein at least one of the transducers is arranged to convert light signals from each of a plurality of different rooms into electric signals.

5. A building according to claim 3 or claim 4, wherein at least one of the one or more transducers forms a part of the capture unit.

6. A building according to any of claims 3 to 5, wherein each of the one of the one or more transducers is able to convert a varying light signal into an electric signal having a resolution sufficient to enable detection of changes in light intensity of a duration of a nanosecond.

7. A building according to any preceding claim, wherein at least some of the plurality of waveguides are arranged for delivering light reflected by objects in the plurality of rooms, via one or more input nodes in each room, to the signal capture unit.

8. A building according to claim 7, wherein at least some of the plurality of waveguides are arranged both to deliver light from the light source to one or more output nodes and to deliver reflected light from one or more input nodes.

9. A building according to claim 7 or claim 8, wherein at least one input node also performs the function of an output node.

10. A building according to any preceding claim, wherein there are a plurality of rooms in which there is only one or two output nodes.

11. A building according to any preceding claim, wherein the one light source is arranged to deliver light to a multiplicity of output nodes.

12. A building according to any preceding claim, wherein the light source is a laser light source arranged to emit pulses having a duration of between 0.1 and 100 nanoseconds.

13. A kit of parts comprising:
- at least one light source for emitting a series of light pulses,
- a plurality of waveguides,
- one or more input and/or output nodes,
- at least one signal capture unit, and
- a signal processor,
wherein
the kit of parts is so arranged as to be suitable for converting a building comprising a plurality of rooms into a building according to any preceding claims.

14. A method of sensing room occupancy, wherein the method comprises the following steps:
- delivering a series of light pulses via a plurality of waveguides to one or more output nodes located in each of the plurality of rooms,
- the scene in each room reflecting the light pulses emitted by the output nodes,
- detecting the reflected light pulses,
- monitoring for a difference between the detected waveform of a first reflected light pulse reflected from the pulse emitted from an output node and the detected waveform of a second reflected light pulse from the same output node, and performing such a monitoring step in respect of each of the output nodes,
- detecting movement in a room by means of detecting such a difference between detected waveforms and ascertaining the room concerned.

15. A method according to claim 14, wherein the step of monitoring for a difference between the detected waveforms is performed by means of a signal processor.
